Europäisches Patentamt

European Patent Office

Office européen des brevets

(11) Publication number: **0 217 551**
**A1**

## (12) EUROPEAN PATENT APPLICATION

(21) Application number: 86306759.1

(22) Date of filing: 02.09.86

(51) Int. Cl.⁴: **A47K 10/28** , B60R 22/00

The title of the invention has been amended (Guidelines for Examination in the EPO, A-III, 7.3).

(30) Priority: 03.09.85 GB 8521840

(43) Date of publication of application:
08.04.87 Bulletin 87/15

(84) Designated Contracting States:
AT BE CH DE FR IT LI LU NL SE

(71) Applicant: **Dudley Industries Ltd.**
**Preston Road**
**Lytham Lancs(GB)**

(72) Inventor: **Fielding, Robert Michael George**
**65 Clarendon Road**
**Lytham St.Annes Lancashire(GB)**

(74) Representative: **Powell, Stephen David et al**
**J.F. Williams & Co. 34 Tavistock Street**
**London WC2E 7PB(GB)**

(54) **Rotary escapement mechanism.**

(57) A rotary escapement mechanism for a roller towel dispenser comprises a rotatable disc (20) mounted within a circular opening opening in a plate (I0); upon rapid rotation of the disc in the direction of arrow A, a roller (30) in a notch (2I) in the edge of the disc is moved centrifugally outwardly into a recess (I2) to prevent further rotation of the disc. Continuous gentle rotation in direction A is permitted, however, since rollers (30) do not leave their notches (2I). Any rotation in the opposite direction is limited by a roller (30') being jammed between the plate (10) and the shallow end of a notch (2I).

FIG.1

## Improvements in Washroom Devices

The present invention relates to an improved escapement mechanism for use in washroom devices and more particularly to a mechanism for controlling the advance of a rotary member such as a roller in a roller towel dispenser.

The present invention seeks to provide a simple mechanism which is reliable in operation. It also seeks to provide a mechanism in which advance in one direction is limited to a certain extent and advance in the other direction is substantially prevented. It also seeks to provide a mechanism which will not operate if an attempt is made to actuate it suddenly.

According to the present invention there is provided a rotary escapement mechanism which is characterised in that it comprises a fixed member having a first engagement means and a rotatable member having one or more radially-movable second engagement means which, upon rotation of the rotatable member, can engage said first engagement means whereby to restrict rotation of the rotatable member.

The fixed member may have a substantially circular opening and the first engagement means may be constituted by a recess in the edge of the opening. The rotatable member may be of substantially circular cross-section and may be mounted with a clearance in the opening. The second engagement means are preferably provided at the circumference of the rotatable member and may each comprise a rolling means located in a circumferential notch in the edge of the rotatable member.

Thus, where the recess has a depth $a$ and the or each notch has a depth $b$, the diameter of the rolling means is greater than $a + d$ but less than $b + d$ where $d$ is the clearance between the circumference of the rotatable member and the surface of the circular opening. The notches may not be of constant depth, in which case $b$ in the above relationship is the depth of the notch at its back end, that is the end which is at the back when the rotatable member is rotated in a particular direction.

In a preferred embodiment the notches taper from a depth $b$ and their back end to a depth $c$ at their front end, where $c + d$ is smaller than the diameter of the unstressed rolling means. This arrangement ensures that rotation in an unwanted reverse direction is prevented.

There are preferably three circumferential notches in the rotatable member.

The rotatable member is preferably a disc, which may be connected to a roller of a roller towel dispenser. Jamming of the rolling means between the notch and recess edges is achieved by rotation of the disc in a first, forward, direction, the rolling means being urged into their jam position by a centrifugal effect. Jamming of the rolling means between the narrow end of the notch and the surface of the circular opening is achieved by rotation of the disc in a second, reverse, direction.

A preferred embodiment of the present invention will now be described, by way of example only with reference to the accompanying drawings, in which:

Fig. I illustrates an escapement mechanism for a roller towel being advanced in a forward direction; and

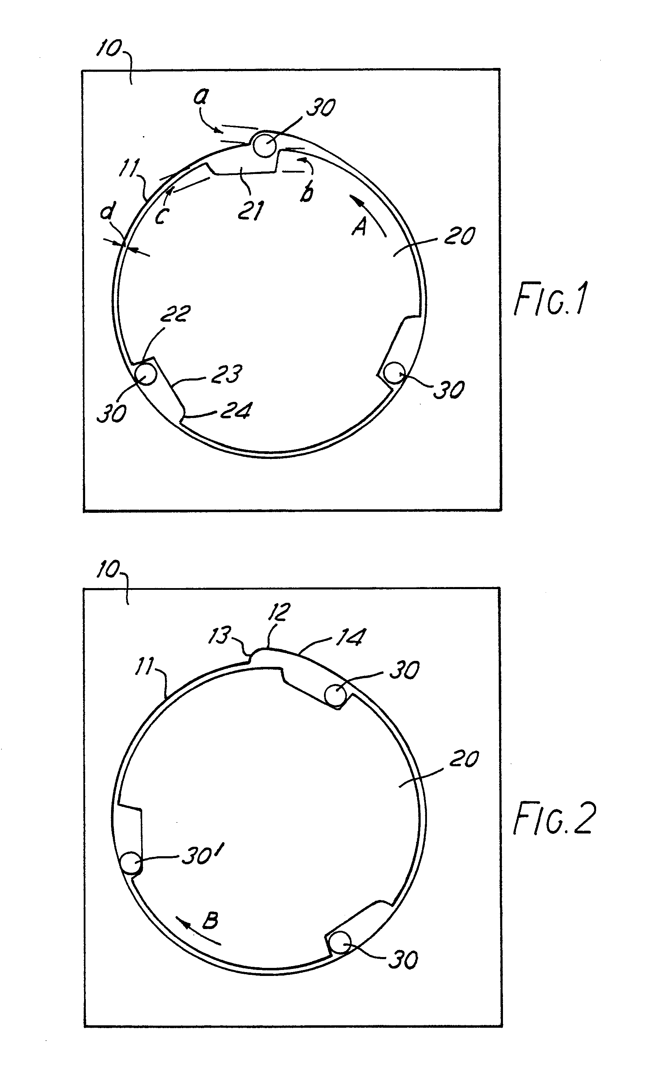

Fig. 2 illustrates the mechanism of Fig.I being pulled in the reverse direction.

Referring to the drawings, a roller towel dispenser comprises a side plate I0 having a substantially circular opening II therein. At the top of the opening a recess I2 of depth $a$ is provided which, as shown has a steep edge I3 and a gently inclined edge I4.

Mounted for rotation in the opening II with a clearance $d$ there is provided a disc 20. Disc 20 is fixedly connected to one end of a roller (not shown) carrying a towel to be dispensed.

Disc 20 has three identical tapering notches 2I in its periphery. Each notch 2I comprises a steep and deep edge 22, a gently inclined base 23 and a more inclined edge 24. Edge 22 has a depth $b$ and edge 24 has a depth $c$ where $c$ is less than $b$. Loosely positioned within each notch 2I is a roller 30. To maintain its axis horizontal, the length of roller 30 is greater than the maximum depth of notch 2I.

The rollers are of an impact-resistant non-corrodible substance such as steel, which may be surface hardened and treated against rust, e.g. by chromium plating.

In a preferred arrangement the rollers 30 have a diameter of 6mm and a length of I0mm. In this case the approximate values of parameters $a$ to $d$ are:

a = 2.5-4 mm
b = 6 mm
c = 4.5 mm
d = 0.5 mm

Operation of the escapement mechanism will now be described. When a user withdraws a length of the roller towel, disc 20 will be rotated in the direction of arrow A, Fig.I. If the user pulls the towel gently, the rollers 30 remain in contact with the bases 23 of notches 2I as they pass beneath recess I2. Accordingly, provided the user only pulls the towel gently, as much towel as desired can be withdrawn.

However, if the user snatches at the towel, the rollers 30 will be centrifugally forced outwards by the quick rotation of the disc. At the same time they will be urged to the back end of notches 2l, ie against the respective edge 22. In this case the roller in the top notch 2l will be jammed between the edge 22 of the disc and the edge l3 of the recess l2 in the fixed side plate l0.

Accordingly rotation of the disc 20 and hence dispensing of the towel, will be prevented until the user releases the force on the towel. This permits disc 20 to rotate backwards slightly and the top roller 30 falls under gently into its notch 2l to release the disc for further rotation.

Thus the escapement mechanism constitutes a simple and efficient "anti-snatch" device to prevent continuous high speed through pull of the towel. If a user snatches at the towel, dispensing is limited to an amount corresponding to a maximum of a third of a rotation of the disc 20, ie until the next roller 30 arrives at recess l2. However, gentle pulling of the towel permits the user to withdraw as much towel as is required.

With reference to Fig. 2, the behaviour of the system will now be described when an attempt is made to pull the towel in the incorrect direction, ie the reverse direction indicated by arrow B. Before the force is applied, at least one of the rollers 30, here 30', will be located under the effects of gravity towards the narrow end 24 of its notch 2l. Upon the force being applied the roller 30' moves even further towards the narrow end of the notch and prevents rotation in the direction of arrow B by becoming jammed between the base 23 of notch 2l and the adjacent surface of the opening ll in the fixed side plate. Upon force being applied in the forward direction, roller 30' is released from its jammed position and the escapement mechanism is again ready for operation.

Depending upon the angular location of the notches 2l when the reverse pull is applied and depending upon the strength of the pull, one or both of the other rollers 30 may also serve to prevent reverse rotation of the disc 20.

Thus the escapement mechanism also has the advantage of operating as a taper locking clutch to prevent reverse operation, without the need for additional components.

A particular advantage of having three notches 2l is that this is the minimum number which will ensure that, whatever the angular position of the disc 20, there will always be a roller 30 which is already located by gravity towards the narrow end of its recess.

In modifications of the above-described arrangement there may be provided one, two or more than three rollers 30. With more than three rollers, the length of towel which can be dispersed in the forward direction upon snatching is reduced. With one or two rollers, the restriction of reverse rotation is not as efficient; however reverse rotation will be stopped when a notch arrives at a suitable angular position or if the pull is sufficiently strong to move the roller to the narrow end of the notch 2l against the effect of gravity.

In another modification the notches 2l do not taper and are of constant depth. This does not alter the performance of the escapement in the forward direction; alternative means for preventing reverse rotation may be provided if desired.

The rollers 30 may be replaced by spherical engagement means.

A roller towel dispenser usually comprises a plurality of rollers which rotate simultaneously when a towel is dispensed. The disc 20 may be attached to any of these either directly or indirectly, eg by a gear mechanism or by a chain or belt connecting the drive and driven rollers within the dispenser. In dispensers where a towel to be dispensed is rolled up on itself and does not have a separate roller at its centre (a so-called centre-less wound roller towel) the disc may be in frictional engagement with the circular end of the rolled towel.

Although the escapement mechanism has been described in connection with roller towel dispensers it can also be used in other rotary applications, for example a roller for a car seat belt. When connected to a suitable converter of linear and rotary motion, the escapement may also be used to control linear motion.

## Claims

l. A rotary escapement mechanism characterised in that it comprises a fixed member (l0) having a first engagement means (l2) and a rotatable member (20) having one or more radially-movable second engagement means (30) which, upon rotation of the rotatable member, can engage said first engagement means whereby to restrict rotation of the rotatable member.

2. A mechanism as claimed in claim l, wherein the fixed member has a substantially circular opening (ll), the first engagement means is constituted by a recess (l2) in the edge of the opening, and wherein the rotatable member is of substantially circular cross-section and is mounted with a clearance ($\underline{d}$) in the opening.

3. A mechanism as claimed in claim 2, wherein the second engagement means comprises one or more rolling means (30) located in one or more respective circumferential notches (2l) in the edge of the rotatable member.

4. A mechanism as claimed in claim 3, wherein the recess (l2) has as depth $a$ and the or each notch (2l) has a depth $b$, the diameter of the rolling means (30) being greater than $a + d$ but less than $b + d$ where $d$ is the clearance between the circumference of the rotatable member and the surface of the circular opening.

5. A mechanism as claimed in claim 4, wherein the or each notch (2l) is inclined from a maximum depth $b$ to a minimum depth $c$ where $c + d$ is less than the diameter of the rolling means (30).

6. A mechanism as claimed in any of claims 3 to 5, wherein there are three circumferential notches (2l) in the rotatable member (20).

7. A mechanism as claimed in any preceding claim wherein the rotatable member is in the form of a disc (20).

8. A roller towel dispenser comprising a rotary escapement mechanism according to any preceding claim and further comprising a roller which is connected to the rotatable member (20) of the mechanism.

9. A roller towel dispenser comprising a rotary escapement mechanism according to any of claims l to 7 and a centre-less wound roller towel having a circular end, wherein the rotatable member (20) of the mechanism is in frictional engagement with the circular end of the wound towel.

FIG.1

FIG.2

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | US-A-3 442 467 (STOFFEL) <br> * Column 4, line 59 - column 6, line 4; figures 1-6 * <br> --- | 1-7 | A 47 K 10/28 <br> B 60 R 22/00 |
| X | US-A-2 378 789 (PULVER & WILLIAM) <br> * Page 2, column 2, line 21 - page 3, column 1, line 38; figures 7,8 * | 1,8 | |
| A | --- | 7 | |
| A | US-A-1 899 369 (TYLER) <br> * Page 4, lines 110-127; figure 6 * <br> ----- | 1,2,8 | TECHNICAL FIELDS SEARCHED (Int. Cl.4) <br><br> A 47 K <br> B 60 R |

The present search report has been drawn up for all claims

| Place of search | Date of completion of the search | Examiner |
|---|---|---|
| THE HAGUE | 26-11-1986 | PORWOLL H.P. |